# EUROPÄISCHE PATENTSCHRIFT

(11) **EP 2 655 911 B1**
(45) Veröffentlichungstag und Bekanntmachung des Hinweises auf die Patenterteilung: **29.03.2017**
(21) Anmeldenummer: 11815434.3
(22) Anmeldetag: 01.12.2011
(51) Int. Cl.: F16D 3/223

(54) **ANORDNUNG MIT GELENK UND ZAHNRADKÖRPER**
ARRANGEMENT WITH JOINT AND GEARWHEEL BODY
AGENCEMENT AVEC JOINT ET CORPS DE PIGNON

(30) Priorität: 23.12.2010 DE 102010056112
(43) Veröffentlichungstag der Anmeldung: 30.10.2013
(73) Patentinhaber: Neumayer Tekfor Holding GMBH, 77756 Hausach (DE)
(72) Erfinder: EBERT, Alexander, 77704 Oberkirch (DE); LEHMANN, Martin, 78132 Hornberg (DE); ROSER, Tobias, 77948 Friesenheim (DE); ETZOLD, Thomas, 77654 Offenburg (DE); BENZ, Tim, 77756 Hausach (DE)
(86) Internationale Anmeldenummer: PCT/DE2011/002071
(87) Internationale Veröffentlichungsnummer: WO 2012/083917

(56) Entgegenhaltungen:
- WO-A1-02/14092
- WO-A1-2006/074678
- DE-A1- 3 820 449
- DE-C1- 3 700 868
- GB-A- 1 213 931

## Beschreibung

Die Erfindung bezieht sich auf eine Anordnung mit einem Gelenk und einem Zahnradkörper für ein Getriebe gemäß dem Oberbegriff des Patentanspruchs 1.

Eine ähnliche Anordnung beschreibt beispielsweise die Patentschrift DE 199 04 960 C1. Bei dem dortigen Gelenk handelt es sich jedoch um ein Kreuzgelenk. Solche Kreuzgelenke werden beispielsweise in schrägverzahnte Kegelräder von Verteilergetrieben eingefügt und dort verschweißt. Nachteilig neben dem Ungleichlauf ist, dass solche Kreuzgelenke den zu erwartenden Drehmomentbelastungen von zukünftigen Fahrzeugmotoren nicht standhalten werden.

Ein Differentialgetriebe mit zwei integrierten Gleichlaufdrehgelenken offenbart die WO 2006/074678 A1. Dabei sind ein Differentialkorb, Ausgleichsräder und Seitenwellenräder vorgesehen. Die Ausgleichsräder sind drehbar gelagert und laufen mit dem Differentialkorb um. Die Seitenwellenräder sind mit den Ausgleichsrädern in Verzahnungseingriff. Die Außennaben der Gleichlaufdrehgelenke sind fest mit jeweils einem Seitenwellenrad verbunden. Mit dem Differentialkorb ist ein Tellerrad verbunden, das zur Einleitung des Drehmoments vorgesehen ist.

Ein Differential mit Gleichlaufgelenken zeigt ebenfalls die GB 1 213 931 A.

Beschreibungen von Details von Gleichlaufgelenken lassen sich der DE 37 00 868 C1 oder der DE 38 20 449 A1 entnehmen.

Eine Kupplungseinheit zwischen einem Differential und einem angetriebenen Rad beschreibt die WO 02/14092 A1, wobei ebenfalls ein Gleichlaufgelenk zur Anwendung kommt.

Der Erfindung liegt die Aufgabe zugrunde, eine Anordnung von Zahnradkörper und Gelenk vorzuschlagen, welche auch die Übertragung von höheren Drehmomenten erlaubt.

Die Aufgabe wird erfindungsgemäß dadurch gelöst, dass die Außennabe zwischen einem Absatz des Zahnradkörpers und einem eine der Außennabe zugewandte - insbesondere elastisch verformbare oder plastisch deformierbare oder federnde - Nase aufweisenden Lagerdeckel oder - alternativ - zwischen einem Absatz des Zahnradkörpers und einem Wulst des Zahnradkörpers angeordnet - insbesondere fixiert - ist.. Der Zahnradkörper ist dabei insbesondere Teil eines Getriebes.

Eine Ausgestaltung sieht vor, dass zumindest die aktiven Abschnitte der inneren Kugelbahnen jeweils eine entlang der zugeordneten Längsachse sich im Wesentlichen ständig ändernde Krümmung aufweisen, dass zumindest die aktiven Abschnitte der äußeren Kugelbahnen jeweils eine entlang der zugeordneten Längsachse sich im Wesentlichen ständig ändernde Krümmung aufweisen, und dass die Krümmung der aktiven Abschnitte der inneren Kugelbahnen und die Krümmung der aktiven Abschnitte der äußeren Kugelbahnen derartig ausgestaltet und aufeinander abgestimmt sind, dass der Steuerwinkel zumindest zwischen den Zuständen des vollständig gestreckten Gelenks und des maximal gebeugten Gelenks im Wesentlichen konstant ist. Die Krümmung der Bahnen ändert sich somit jeweils längs der Längsachse der jeweiligen Nabe. Siehe hierzu die nicht vorveröffentlichte Anmeldung DE 10 2010 027 059.8 der Anmelderin. Die Bahnkurven dieses speziellen Gelenks sind derartig ausgestaltet, dass bei Beugung des Gelenks der Steuerwinkel im Gegensatz zum Stand der Technik konstant bleibt.

Die folgenden Ausgestaltungen beziehen sich insbesondere auf das zuvor genannte spezielle Gleichlaufgelenk. Eine Ausgestaltung sieht vor, dass die inneren Kugelbahnen jeweils im Wesentlichen vollständig eine entlang der zugeordneten Längsachse sich im Wesentlichen ständig ändernde Krümmung aufweisen. Die ständige Krümmung bezieht sich somit z.B. auch auf Bereiche, in welchen die Kugeln sich nur während der Montage des Gelenks befinden. Eine Ausgestaltung beinhaltet, dass die äußeren Kugelbahnen jeweils im Wesentlichen vollständig eine entlang der zugeordneten Längsachse sich im Wesentlichen ständig ändernde Krümmung aufweisen. Entsprechendes gilt auch hier für die äußeren Kugelbahnen, deren Krümmung sich über ihren gesamten Verlauf ständig ändert. Eine Ausgestaltung sieht vor, dass zumindest die aktiven Abschnitte der inneren Kugelbahnen jeweils in einer Ebene mit der zugeordneten Längsachse verlaufen. Die aktiven Kugelbahnen haben somit in ihrem Verlauf keinen seitlichen Versatz. Eine Ausgestaltung beinhaltet, dass die inneren Kugelbahnen jeweils im Wesentlichen vollständig in einer Ebene mit der zugeordneten Längsachse verlaufen. Eine Ausgestaltung sieht vor, dass zumindest die aktiven Abschnitte der äußeren Kugelbahnen jeweils in einer Ebene mit der zugeordneten Längsachse verlaufen. Die äußeren Kugelbahnen fluchten in dieser Ausgestaltung mit der Längsachse der Außennabe. Eine Ausgestaltung beinhaltet, dass die äußeren Kugelbahnen jeweils im Wesentlichen vollständig in einer Ebene mit der zugeordneten Längsachse verlaufen. Eine Ausgestaltung sieht vor, dass die Krümmung der aktiven Abschnitte der inneren Kugelbahnen und die Krümmung der aktiven Abschnitte der äußeren Kugelbahnen der gleichen mathematischen Funktion gehorchen. In dieser Ausgestaltung verlaufen die jeweils paarweise einander zugehörigen Kugelbahnen gleichförmig. Eine Ausgestaltung beinhaltet, dass die Krümmung zumindest der aktiven Abschnitte der inneren Kugelbahnen und/oder die Krümmung zumindest der aktiven Abschnitte der äußeren Kugelbahnen zumindest annähernd durch eine zumindest stückweise lineare mathematische Funktion beschreibbar sind. Eine Ausgestaltung sieht vor, dass die Krümmung zumindest der aktiven Abschnitte der inneren Kugelbahnen und/oder die Krümmung zumindest der aktiven Abschnitte der äußeren Kugelbahnen zumindest annähernd durch eine zumindest stückweise elliptische mathematische Funktion beschreibbar sind.

Eine Ausgestaltung beinhaltet, dass eine Außenseite der Außennabe mindestens über einen Press- und/oder Formschluss in Kontakt mit einer Innenseite des Zahnradkörpers ist.

Erfindungsgemäß ist in einer Variante vorgesehen, dass die Außennabe zwischen einem Absatz des Zahnradkörpers und einem Lagerdeckel angeordnet - insbesondere fixiert - ist. In dieser Ausgestaltung ist in der Innenseite des Zahnradkörpers ein Absatz vorgesehen, gegen welchen die Außennabe des Gelenks mit einer Seite anliegt. Auf der anderen Seite der Außennabe befindet sich ein Lagerdeckel, welcher in einer Ausgestaltung auch eine Seite der Anordnung oder speziell des Zahnradkörpers abschließt. Dabei ragt beispielsweise die Innennabe oder eine mit der Innennabe verbundene Welle aus dem Lagerdeckel heraus.

Dabei weist erfindungsgemäß der Lagerdeckel eine der Außennabe zugewandte - insbesondere elastisch verformbare oder plastisch deformierbare oder federnde - Nase auf. Der Lagerdeckel verfügt über eine Erstreckung, welche als Anschlag für die Außennabe fungiert. Dabei lässt sich die Nase beispielsweise während der Montage elastisch oder plastisch verformen oder umformen. Vorzugsweise wird die Nase dabei nach außen, d.h. in Richtung des Zahnradkörpers verformt. In einer weiteren Ausgestaltung ist die Nase federnd ausgestaltet. Über diese Nase ist es z.B. möglich, Toleranzen der Bauteile auszugleichen.

Eine Ausgestaltung besteht darin, dass der Zahnradkörper und der Lagerdeckel miteinander verbunden, insbesondere miteinander verschweißt sind. Bei einer Variante ist insbesondere vorgesehen, dass die Verschweißung des Zahnradkörpers mit dem Lagerdeckel ein das Schweißen begleitendes Drücken von Zahnradkörper und Lagerdeckel gegeneinander beinhaltet. In dieser Ausgestaltung werden Zahnradkörper und Lagerdeckel miteinander verschweißt, wobei in einer Ausgestaltung während des Schweißens ein axialer Druck ausgeübt wird, so dass Zahnradkörper und Lagerdeckel gegeneinander gepresst werden.

Alternativ ist erfindungsgemäß vorgesehen, dass die Außennabe zwischen einem Absatz des Zahnradkörpers und einem Wulst des Zahnradkörpers angeordnet - insbesondere fixiert - ist. In dieser erfindungsgemäßen Ausgestaltung ist die Außennabe zwischen dem Anschlag des Zahnradkörpers und einem Wulst des Zahnradkörpers eingespannt, wobei der Wulst vorzugsweise nach dem Einbringen der Außennabe in den Innenraum des Zahnradkörpers erzeugt wird, d.h. auf der Seite des Wulstes wird das Material des Zahnradkörpers definiert plastisch und insbesondere in Richtung des Innenraums verformt. Hierfür ist es beispielsweise vorgesehen, dass der Zahnradkörper nach dem Einbringen der Außennabe und vor dem Erzeugen des Wulstes noch nicht gehärtet ist. In dieser Variante werden beispielsweise zumindest Außennabe und Zahnradkörper erst im montierten Zustand gehärtet. In einer Variante ist zumindest eine Komponente, z.B. die Außennabe schon teilweise vorgehärtet.

Eine Ausgestaltung beinhaltet, dass mindestens ein Dichtelement vorgesehen ist, welches zwischen der Außennabe und dem Lagerdeckel angeordnet ist und welches auf der Innennabe und/oder einer Verlängerung der Innennabe mündet. In einer Ausgestaltung ist vorgesehen, dass das Dichtelement - z.B. ein Faltenbalg - zwischen der Außennabe und dem Lagerdeckel eingepresst ist und elastische Eigenschaften aufweist, d.h. mechanisch belastbar ist.

Eine Ausgestaltung sieht vor, dass auf einer vom Lagerdeckel abgewandten Seite des Gelenks ein Abschlusselement - insbesondere ein Blechhut - vorgesehen ist. In dieser Ausgestaltung wird die vom Lagerdeckel abgewandte Seite der erfindungsgemäßen Anordnung bzw. des Zahnradkörpers zumindest teilweise durch ein Abschlusselement verschlossen. Dabei handelt es sich beispielsweise um eine Art Blechhut mit einem zylindrischen Aufbau, welcher in eine Aussparung des Zahnradkörpers eingebracht wird.

Eine Ausgestaltung beinhaltet, dass in mindestens einem Hohlraum der Anordnung mindestens ein - insbesondere geschlossenporiges - Füllelement angeordnet ist. In einer Variante ist dabei vorgesehen, dass das Füllelement z.B. als Schaumelement auf der dem Blechhut zugewandten Seite der Außennabe angeordnet ist. In dieser Ausgestaltung wird ein Innenraum der Anordnung mit einem Füllelement, z.B. einem Element aus Schaum bestückt. Vorzugsweise ist das verwendete Material beständig gegenüber Schmiermitteln und gegenüber der Temperatur. Das Füllelement reduziert den um das Gelenk herum bestehenden Raum, welcher für das sichere Funktionieren des Gelenks beispielsweise mit Schmierfett aufgefüllt wird. Ein Hohlraum ergibt sich beispielsweise durch eine Leichtbauweise der Anordnung und insbesondere wenn die äußeren Dimensionierungen der Anordnung bzw. der Komponenten davon beibehalten werden.

Die Erfindung wird anhand der Figuren näher erläutert. Dabei zeigen:
Fig. 1: einen Schnitt durch ein schematisches Gelenk im ungebeugten Zustand,
Fig. 2: einen Ausschnitt des Gelenks der Fig. 1,
Fig. 3: eine erfindungsgemäße Anordnung,
Fign. 4 a) und b): die Anordnung der Fig. 3 und einen vergrößerten Ausschnitt, und
Fign. 5 a) und b): eine andere Variante der erfindungsgemäßen Anordnung während der Montage und ein vergrößerter Ausschnitt davon.

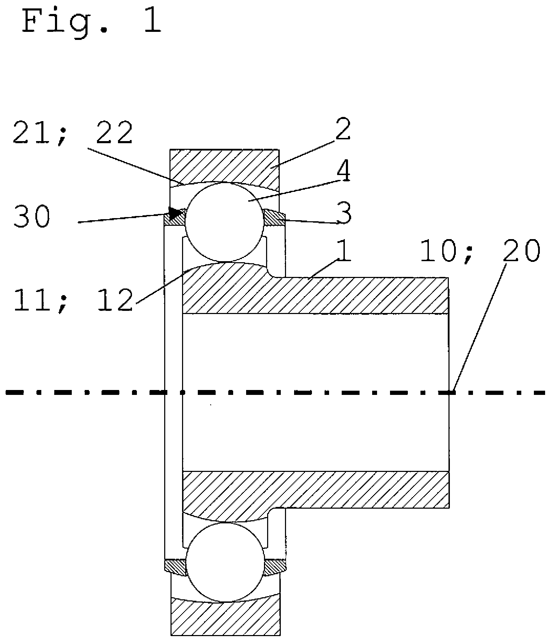

In der Fig. 1 ist ein Schnitt durch ein Gelenk (vgl. die o.g. Anmeldung mit dem Aktenzeichen DE 10 2010 027 059.8) dargestellt, wie es in einer Ausgestaltung Teil der erfindungsgemäßen Anordnung ist. Zwischen der Innennabe 1 und der Außennabe 2 befinden sich Kugeln 4 zur Übertragung des Drehmoments zwischen den beiden Naben 1, 2. Für die Kugeln 4 sind in der Innennabe 1 innere Kugelbahnen 11 und in der Außennabe 2 äußere Kugelbahnen 21 vorgesehen, welche jeweils paarweise eine Kugel 4 aufnehmen. Die Kugeln 4 sind jeweils in einem Fenster 30 des Käfigs 3 angeordnet, welcher sich zwischen der Innennabe 1 und der Außennabe 2 befindet und welcher die Kugeln 4 in einer Ebene hält. In der hier gezeigten Variante fallen jeweils die aktiven Abschnitte 22 der äußeren Kugelbahnen 21 mit den äußeren Kugelbahnen 21 bzw. fallen die aktiven Abschnitte 12 der inneren Kugelbahnen 11 mit den inneren Kugelbahnen 11 zusammen. Dargestellt ist das Gelenk im vollständig gestreckten, d.h. ungebeugten Zustand, in welchem die Längsachse der Außennabe 20 und der Innennabe 10 zusammenfallen. Dies ist somit auch die Längsachse des Gelenks.

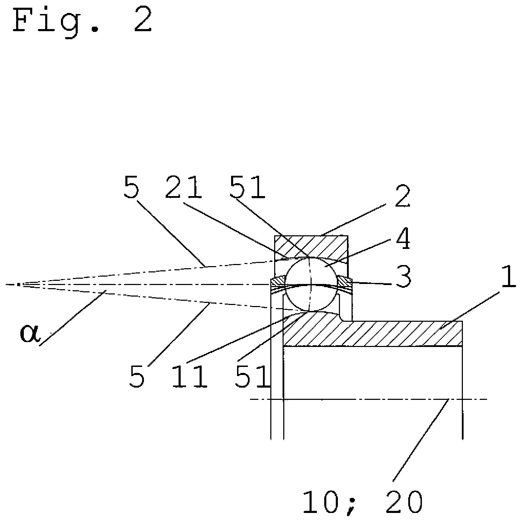

Im Ausschnitt der Fig. 2 sind die Tangentialebenen 5 an den Kontaktpunkten 51 der Kugeln 4 mit den inneren 11 und äußeren Kugelbahnen 21 eingezeichnet. Diese bilden den Steuerwinkel α. Der Steuerwinkel α ändert sich bei den Gelenken des Standes der Technik in Abhängigkeit vom Beugewinkel des Gelenks. Bei dem hier gezeigten und vorteilhafterweise in der erfindungsgemäßen Anordnung verwendeten Gelenk ist der Steuerwinkel α bei jeder Beugung gleich. Dies lässt sich z.B. dadurch erreichen, dass die Kugelbahnen einer elliptischen Funktion folgen.

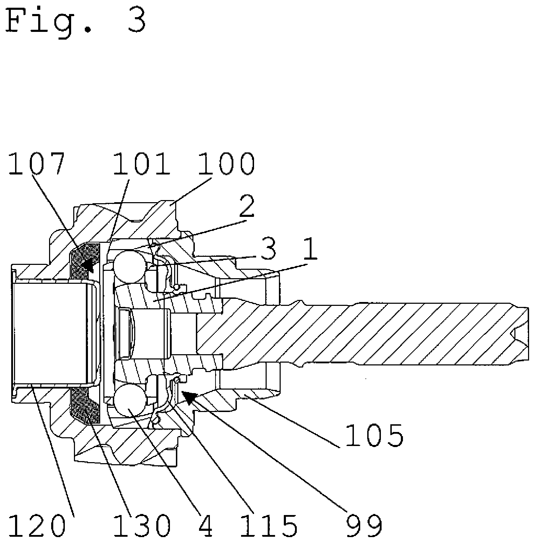

In der Fig. 3 ist eine erfindungsgemäße Anordnung mit einem Gelenk 99 - dabei handelt es sich beispielsweise um ein Gelenk gemäß Fign. 1 und 2 - und einem Zahnradkörper 100 (dabei handelt es sich beispielsweise um ein Abtriebszahnrad eines Getriebes) dargestellt. Der Zahnradkörper 100 des - sonst nicht dargestellten - Getriebes verfügt in dieser Ausgestaltung über eine zylindrische Verlängerung an einer Seite, welche sich hier zeichnerisch links befindet. In dem vom Zahnradkörper 100 umschlossenen Innenraum ist das Gleichlaufgelenk 99 angeordnet. Die Außennabe 2 ist dabei vorzugsweise form- und kraftschlüssig mit der Innenseite des Zahnradkörpers 100 verbunden und ruht mit einer Seite an einem Anschlag 101 des Zahnradkörpers 100. Eine Seite des Innenraumes um das Gelenk 99 bzw. umschlossen vom Zahnradkörper 100 wird durch ein Abschlusselement 120 verschlossen. Das Abschlusselement 120 ist hier als Blechhut ausgeführt, welcher in den zylindrisch sich erstreckenden Anschlussabschnitt des Zahnradkörpers 100 eingepresst und dort beispielsweise zusätzlich verklebt ist. In einer weiteren - hier nicht dargestellten - Variante ist zwischen der Außennabe 2 und dem Zahnradkörper 100 ein Dämpfungselement vorgesehen. Zwischen dem Gelenk 99 und der Innenwandung des Zahnradköpers 100 bzw. des Abschlusselements 120 befindet sich ein Hohlraum 107, welcher durch ein Füllelement 130 teilweise ausgefüllt ist. Das Füllelement 130 besteht beispielsweise zumindest teilweise aus einem vorzugsweise geschlossenenporigen Schaumstoff, welcher zudem vorzugsweise fett- und temperaturbeständig ist. Da das Gelenk 99 von Fett umgeben ist, wird durch das Füllelement 130 die Menge des erforderlichen Fetts herabgesetzt. In der dargestellten Ausgestaltung ragt das Abschlusselement 120 zylinderförmig in den Hohlraum 107 hinein, und das Füllelement 130 umgibt das Abschlusselement 120 ringförmig, wobei die Außenkontur des Füllelements 130 an die Innenkontur des Zahnradkörpers 100 angepasst ist. Auf der Seite des Gelenks 99, an welche sich ein wellenartiger Abschnitt anschließt, ist ein Lagerdeckel 105 vorgesehen. Zwischen Lagerdeckel 105 und Innennabe 1 wird der Innenraum des Zahnradkörpers 100 um das Gelenk 99 herum von einem Dichtelement 115 verschlossen. Das Dichtelement 115, welches beispielsweise ein elastischer Dichtungsbalg ist, ist zwischen dem Lagerdeckel 105 und der Außennabe 2 eingeklemmt und mit der Innennabe 1 verbunden. Der Lagerdeckel 105 und der Zahnradkörper 100 sind beispielsweise derartig miteinander verschweißt, dass während des Schweißens ein axialer Druck zwischen Lagerdeckel 105 und Zahnradkörper 100 aufgebracht wird. Das Gelenk 99 an sich ist bereits vor dem Einbringen des Zapfens der Getriebewelle insbesondere fettdicht abgeschlossen.

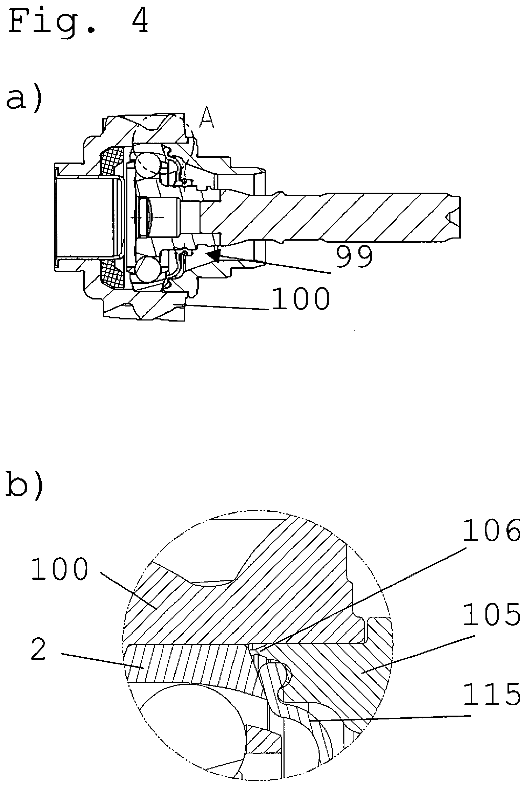

Die Fig. 4 a) zeigt die Lage des vergrößerten Ausschnitts der Fig. 4 b) in der Anordnung der Fig. 3. Im Ausschnitt der Fig. 4 b) ist der Bereich dargestellt, in welchem der Lagerdeckel 105 auf die Außennabe 2 trifft. Dies geschieht hier über eine Nase 106 des Lagerdeckels 105, welche auf der Außennabe 2 aufliegt und somit das Gegenelement zum Anschlag des Zahnradkörpers 100 für die axiale Fixierung des Gelenks 99 bildet. In einer alternativen Ausgestaltung wird die Nase 106 bzw. der Lagerdeckel 105 soweit eingeführt, bis es zu einer plastischen Verformung der Nase 106 kommt. In einer weiteren Ausgestaltung hat die Nase 106 federnde Eigenschaften, so dass auch Änderungen, die sich durch einen Zug zwischen dem Zahnradkörper 100 und dem Gelenk 99 ergeben, ausgeglichen werden. Der hier dargestellte Spalt zwischen dem Lagerdeckel 105 und dem Zahnradkörper 100 wird bei dieser dargestellten Ausgestaltung durch das Schweißen verschlossen.

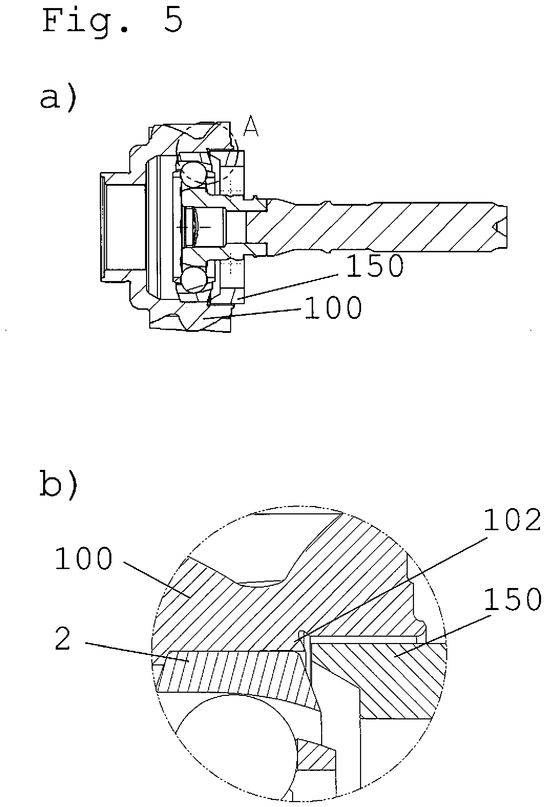

Die Fig. 5 a) und die Vergrößerung der Fig. 5 b) zeigen eine alternative Variante, um die Außennabe 2 axial an der Innenseite des Zahnradkörpers 100 zu fixieren. Hier wird nach dem Einbringen des Gelenks 99 in den Innenraum des Zahnradkörpers 100 mit einem Werkzeug 150 die Innenseite des Zahnradkörpers 100 umgeformt, so dass sich in diesem Bereich 102 des Zahnradkörpers 100 ein Wulst ergibt. Durch den Wulst 102 ist die Außennabe 2 vollständig von der Innenfläche des Zahnradkörpers 100 umfasst und wird dort axial gehalten.

## Patentansprüche

1. Anordnung mit einem Gelenk und einem Zahnradkörper für ein Getriebe, wobei das Gelenk (99) zumindest teilweise in einem vom Zahnradkörper (100) umschlossenen Innenraum angeordnet ist,
wobei es sich bei dem Gelenk (99) um ein Gleichlaufgelenk handelt, wobei das Gelenk (99) eine Innennabe (1) mit einer Längsachse (10) und inneren Kugelbahnen (11) sowie eine Außennabe (2) mit einer Längsachse (20) und äußeren Kugelbahnen (21) aufweist, wobei die inneren Kugelbahnen (11) und die äußeren Kugelbahnen (21) jeweils paarweise einander zugeordnet sind, wobei das Gelenk (99) einen zwischen der Innennabe (1) und der Außennabe (2) angeordneten Käfig (3) mit umfangsverteilten Fenstern (30) aufweist, wobei das Gelenk (99) Kugeln (4) aufweist, welche in den Fenstern (30) des Käfigs (3) und in den Paaren der inneren Kugelbahnen (11) und der äußeren Kugelbahnen (21) angeordnet sind und welche von dem Käfig (3) in einer Ebene gehalten werden, wobei die Tangentialebenen (5) an den Kontaktpunkten (51) der Kugeln (4) mit den inneren Kugelbahnen (11) und den äußeren Kugelbahnen (21) einen Steuerwinkel bilden, wobei die inneren Kugelbahnen (11) jeweils einen aktiven Abschnitt (12) aufweisen, in welchem sich die Kugeln (4) bewegen, und wobei die äußeren Kugelbahnen (21) jeweils einen aktiven Abschnitt (22) aufweisen, in welchem sich die Kugeln (4) bewegen,
**dadurch gekennzeichnet,**
**dass** die Außennabe (2) zwischen einem Absatz (101) des Zahnradkörpers (100) und einem eine der Außennabe (2) zugewandte - insbesondere elastisch verformbare oder plastisch deformierbare oder federnde - Nase (106) aufweisenden Lagerdeckel (105) oder zwischen einem Absatz (101) des Zahnradkörpers (100) und einem Wulst (102) des Zahnradkörpers (100) angeordnet - insbesondere fixiert - ist.

2. Anordnung nach Anspruch 1,
**dadurch gekennzeichnet,**
**dass** eine Außenseite der Außennabe (2) mindestens über einen Press- und/oder Formschluss in Kontakt mit einer Innenseite des Zahnradkörpers (100) ist.

3. Anordnung nach Anspruch 1 oder 2,
**dadurch gekennzeichnet,**
**dass** mindestens ein Dichtelement (115) vorgesehen ist, welches in dem Fall, dass ein Lagerdeckel (105) vorgesehen ist, zwischen der Außennabe (2) und dem Lagerdeckel (105) angeordnet ist und welches auf der Innennabe (1) mündet.

4. Anordnung nach einem der Ansprüche 1 bis 3,
**dadurch gekennzeichnet,**
**dass** in dem Fall, dass ein Lagerdeckel (105) vorgesehen ist, auf einer vom Lagerdeckel (105) abgewandten Seite des Gelenks (99) ein Abschlusselement (120) - insbesondere ein Blechhut - vorgesehen ist.

## Claims

1. An arrangement with a joint and a gearwheel body for a transmission,
wherein the joint (99) is at least partially arranged in an interior space enclosed by the gearwheel body (100),
wherein the joint (99) is a constant velocity joint, wherein the joint (99) has an inner hub (1) with a longitudinal axis (10) and inner ball tracks (11) and an outer hub (2) with a longitudinal axis (20) and outer ball tracks (21), wherein the inner ball tracks (11) and
the outer ball tracks (21) are assigned in pairs to each other,
wherein the joint (99) has a cage (3) with windows (30) distributed around the circumference between the inner hub (1) and the outer hub (2), wherein the joint (99) has balls (4) which are arranged in the windows (30) of the cage (3) and in the pairs of the inner ball tracks (11) and the outer
ball tracks (21) and which are held in the cage (3) on one
plane, wherein the tangential planes (5) at the contact points (51) of the balls (4) form a control angle with the inner ball tracks (11) and the outer ball tracks (21), wherein the inner ball tracks (11) each have an active section (12) in which the balls (4) move and wherein the outer ball tracks (21)
each have an active section (22) in which the balls (4) move,
**characterized by the fact that**
the outer hub (2) is arranged between a shoulder (101) of the gearwheel body (100) and an - especially
elastically deformable or plastically deformable or resilient - bearing cover (105) with a nose (106) facing the outer hub (2) or between a shoulder (101) of the gearwheel body (100) and a bead (102) of the gearwheel body (100) - especially fixed in place.

2. Arrangement according to Claim 1,
**characterized by the fact that**
an outer side of the outer hub (2) is at least in contact with an inner side of the gearwheel body (100) via a press and/or positive locking connection.

3. Arrangement according to Claim 1 or 2,
**characterized by the fact that**
at least one sealing element (115) is provided which, in the case that a bearing cover (105) is provided, is arranged between the outer hub (2) and the bearing cover (105) and which leads to the inner hub (1).

4. Arrangement according to one of the Claims 1 to 3,
**characterized by the fact that**
in the case that a bearing cover (105) is provided, an end element (120) - in particular a sheet metal cap - is provided on a side of the joint (99) facing away from the bearing cover (105).

## Revendications

1. Agencement avec une articulation et un corps d'engrenage pour une boîte de vitesses, l'articulation (99) étant disposée en partie au moins dans une zone intérieure entourée par le corps d'engrenage (100),
l'articulation (99) étant un joint homocinétique, l'articulation (99) présentant un un moyeu intérieur (1) avec un axe longitudinal (10) et des chemins de roulement à billes intérieurs (11), de même qu'un moyeu extérieur (2) avec un axe longitudinal (20) et des chemins de roulement à billes extérieurs (21), les chemins de roulement à billes intérieurs (11) et
les chemins de roulement à billes extérieurs (21) étant disposés par paires les uns par rapport aux autres,
l'articulation (99) présentant une cage (3) disposée entre le moyeu intérieur (1) et le moyeu extérieur (2), avec des fenêtres (30) réparties à la périphérie, l'articulation (99) présentant des billes (4) qui sont disposées dans les fenêtres (30) de la cage (3) et dans les paires de chemins de roulement à billes intérieurs (11) et de chemins de roulement à billes extérieurs (21),
et qui sont maintenues par la cage (3) dans un plan, les plans tangentiels (5) formant un angle de commande au niveau des points de contact (51) des billes (4) avec les chemins de roulement à billes intérieurs (11) et les chemins de roulement à billes extérieurs (21), les chemins de roulement à billes intérieurs (11) présentant chacun une section active (12) dans laquelle se
déplacent les billes (4), et les chemins de roulement à billes extérieurs (21) présentant chacun une section active (22) dans laquelle se déplacent les billes (4), **caractérisé en ce que**
le moyeu extérieur (2) est disposé et, en particulier, fixé, entre un palier (101) du corps d'engrenage (100) et un chapeau de palier (105) présentant un bec (106) en particulier déformable élastiquement ou déformable plastiquement ou encore résilient tourné vers le moyeu extérieur (2), ou entre un palier (101)
du corps d'engrenage (100) et un bourrelet (102) du corps d'engrenage (100).

2. Agencement selon revendication 1,
**caractérisé en ce que**
une face extérieure du moyeu extérieur (2) est en contact avec une face intérieure du corps d'engrenage (100) au moins par l'intermédiaire d'un frettage et/ou d'un emboîtement.

3. Agencement selon revendication 1 ou 2,
**caractérisé en ce que**
il est prévu au moins un élément d'étanchéité (115) qui, dans le cas où un chapeau de palier (105) est prévu, est placé entre le moyeu extérieur (2) et
le chapeau de palier (105), et qui débouche sur le moyeu intérieur (1).

4. Agencement selon l'une des revendications 1 bis 3, **caractérisé en ce que**
au cas où un chapeau de palier (105) est prévu, il est prévu, sur une face de l'articulation (99) opposée au chapeau de palier (105), un élément de terminaison (120), en particulier un chapeau en tôle.
